# EUROPEAN PATENT SPECIFICATION

(11) **EP 3 626 935 B1**
(45) Date of publication and mention of the grant of the patent: **23.03.2022**
(21) Application number: 19208573.6
(22) Date of filing: 23.11.2015
(51) Int. Cl.: F01D 25/16, F02C 7/36, F02C 7/06

(54) **A SPEED CHANGE MECHANISM FOR A GAS TURBINE ENGINE**
EIN DREHZAHLÄNDERUNGSMECHANISMUS FÜR EIN GASTURBINENTRIEBWERK
UN MÉCANISME DE CHANGEMENT DE VITESSE POUR UN MOTEUR À TURBINE À GAZ

(30) Priority: 24.09.2014 US 201462054506 P; 01.12.2014 US 201462085924 P
(43) Date of publication of application: 25.03.2020
(62) Divisional of application: 15195820.4
(73) Proprietor: Raytheon Technologies Corporation, Farmington, CT 06032 (US)
(72) Inventor: ROBERGE, Gary D., Tolland, CT Connecticut 06084 (US); McCUNE, Michael E., Colchester, CT Connecticut 06415 (US); SHERIDAN, William G., Southington, CT Connecticut 06489 (US)
(74) Representative: Dehns

(56) References cited:
- EP-A1- 2 360 391
- EP-A1- 2 743 462
- EP-A1- 2 915 962
- WO-A1-2014/182467
- US-A- 5 010 729
- US-A1- 2010 147 998
- US-A1- 2013 004 297
- US-A1- 2014 087 907
- US-A1- 2014 271 135

## Description

### BACKGROUND

Turbomachines, such as gas turbine engines, typically include a fan section, a turbine section, a compressor section, and a combustor section. Turbomachines may employ a geared architecture connecting the fan section and the turbine section. The compressor section typically includes at least a high-pressure compressor and a low-pressure compressor. The compressors include rotors that rotate separately from a rotor of fan. To maximize performance of such turbomachines, various recent engine architectures have been proposed in which the fan rotates in a first direction and at a first speed as compared to a low pressure compressor which rotates in the opposite direction and at a higher speed. These recent engine architectures can also be improved.

US 2014/087907 A1 discloses a prior art speed mechanism for a gas turbine engine according to the preamble of claim 1.

US 2014/0271135 A1 discloses a prior art turbofan engine bearing and gearbox arrangement.

EP 2 743 462 A1 discloses a prior art lubricant system.

US 2010/147998 A1 discloses a prior art apparatus and method for transmitting rotary input into counter-rotating outputs.

US 5 010 729 discloses a prior art geared counterrotating turbine/fan propulsion system.

EP 2 360 391 A1 discloses a prior art epicyclic gearbox.

US 2013/004297 A1 discloses a prior art dual fan gas turbine engine and gear train.

### SUMMARY

According to an aspect of the present invention, there is provided a speed change mechanism for a gas turbine engine as set forth in claim 1.

According to a further aspect of the present invention, there is provided a gas turbine engine as set forth in claim 3.

According to a further aspect of the present invention, there is provided a method of assembling a gas turbine engine as set forth in claim 9.

Embodiments are provided as set forth in dependent claims 2, 4 to 8, 10 and 11.

### BRIEF DESCRIPTION OF THE DRAWINGS

Figure 1 is a schematic view of an example gas turbine engine.
Figure 2 is an enlarged schematic view of a portion of the example gas turbine engine of Figure 1.
Figure 3 is a sectional view taken along line 3-3 of Figure 2.
Figure 4 is a sectional view taken along line 4-4 of Figure 3.
Figure 5 is a perspective view of a portion of a speed change mechanism.
Figure 6 is a schematic view of another example gas turbine engine.

### DETAILED DESCRIPTION

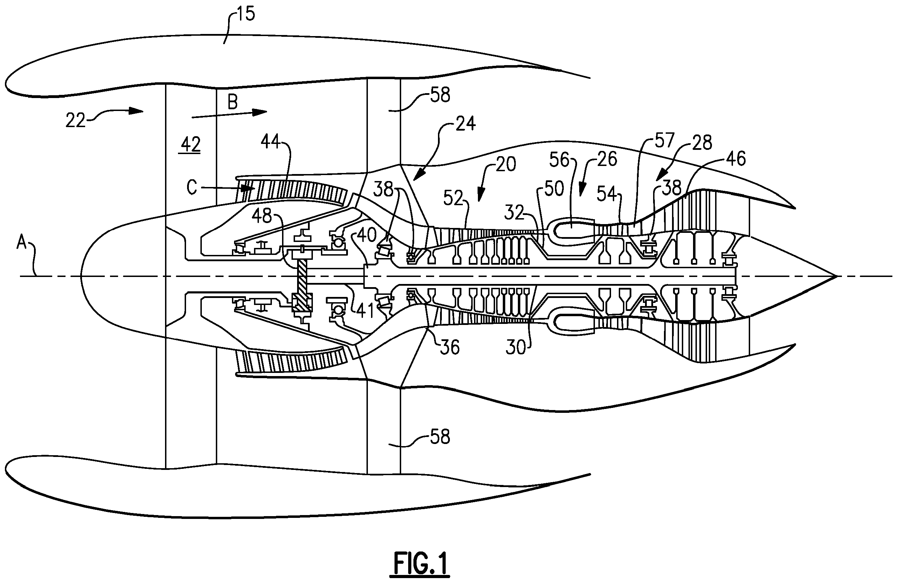

Figure 1 schematically illustrates a gas turbine engine 20. The gas turbine engine 20 is disclosed herein as a two-spool turbofan that generally incorporates a fan section 22, a compressor section 24, a combustor section 26, and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42 through an input shaft 41, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. The second pressure compressor 52 includes a compression ratio of approximately 20:1 or greater. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition-typically cruise at about 0.8 Mach and about 35,000 ft (10,668 m).

The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} ; (T_{(K)} = T_{(°R)} x 5/9).

The "Low corrected fan tip speed" as disclosed herein according to one non-limiting embodiment is less than about 1150 ft / second (350.5 meters/second).

As shown in Figure 1, the low pressure compressor 44 is axially aligned with the geared architecture 48 so that fan exit guide vanes 58 are located further aft to reduce noise from the gas turbine engine 20.

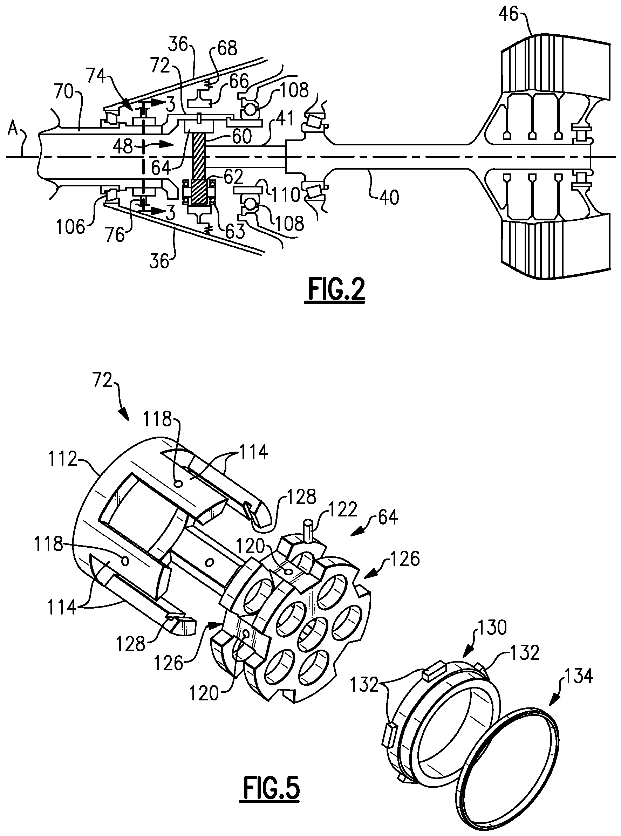

As shown in Figure 2, the geared architecture 48 includes a sun gear 60 that is mounted to the input shaft 41 that is attached to the inner shaft 40. Accordingly, the sun gear 60 is driven by the input shaft 41. Surrounding the sun gear 60 is a plurality of planet gears 62 that are supported on bearings 63 by a planet carrier 64. The planet gears 62 are surrounded by a ring gear 66 that is mounted to the engine static structure 36 with a flexible coupling 68 that allows the geared architecture 48 to flex to allow for proper alignment between the various elements of the geared architecture 48 during operation. The planet carrier 64 is attached to a fan drive shaft 70 through a torque frame 72.

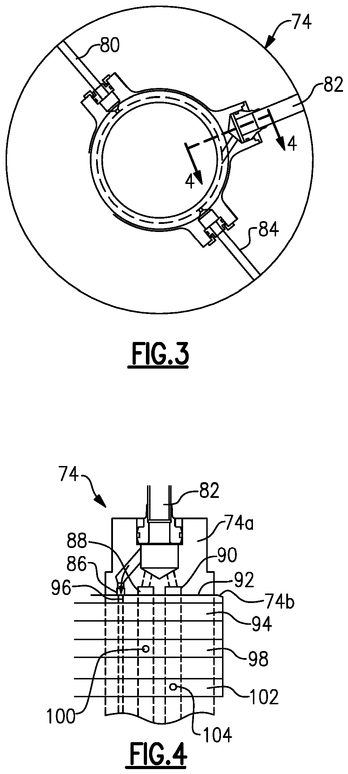

As shown in Figures 2 and 3, an oil transfer bearing 74 directs lubricant from a plurality of stationary oil tubes 76, such as a first stationary oil tube 80, a second station oil tube 82, and a third stationary oil tube 84, into the fan drive shaft 70 and the torque frame 72 to lubricate the geared architecture 48. The oil transfer bearing 74 includes a plurality of inputs to provide lubricant to those portions of the geared architecture 48 that require lubrication during operation. For example, oil from the first stationary oil tube 80 is intended to lubricate at least one of the bearing systems 38, oil from the second stationary oil tube 82 is intended to lubricate the bearings 63 in the geared architecture 48, and oil from the third stationary oil tube 84 is intended to lubricate the sun gear 60, planet gears 62, and the ring gear 66 of the geared architecture 48. Though three oil tube inputs are shown herein, other numbers of oil tubes are contemplated herein.

Figure 4 illustrates a sectional view of the oil transfer bearing 74. In the illustrated example, the oil transfer bearing 74 includes a first race 86, a second race 88, and a third race 90 each having a rectangular shape that extend around an interior surface 92 of a stationary bearing 74a.

A first oil conduit 94 extends axially through the fan drive shaft 70 and is in communication with the first race 86 via a first opening 96. A second oil conduit 98 extends axially through the fan drive shaft 70 and is in communication with the second race 88 via a second opening 100. A third oil conduit 102 extends axially through the fan drive shaft 70 and is in communication with the third race 90 via a third opening 104.

As the fan drive shaft 70 and the rotating bearing 74b rotate within the stationary bearing 74a, the first, second, and third openings 96, 100, 104 are constantly in alignment with the first, second, and third races 86, 88, 90, respectively. This allows oil to flow across a rotating gap between the stationary bearing 74a and the rotating bearing 74b through the first, second, and third openings 96, 100, 104 to the first, second, and third oil conduits 94, 98, 102, respectively, to provide lubrication to the necessary areas in the gas turbine engine 20.

As shown in Figure 2, the geared architecture 48 is located axially between a fan roller bearing 106 and a fan thrust bearing 108. The fan roller bearing 106 engages the fan drive shaft 70 and the static structure 36. The fan thrust bearing 108 engages the static structure 36 and a support ring 110 attached to the torque frame 72.

As shown in Figure 5, the torque frame 72 includes a base ring 112 that attaches to the fan drive shaft 70 on a first axial side and a plurality of fingers 114 that extend from a second axial side of the base ring 112. The plurality of fingers 114 slideably engage corresponding grooves 126 in the planet carrier 64. At least one torque frame pin opening 118 extends through each of the plurality of fingers 114 and aligns with at least one carrier pin opening 120 in the planet carrier 64 to accept a pin 122 that will pass through the at least one torque frame pin openings 118 and into that at least one carrier pin openings 120 to lock the torque frame 72 from moving axially relative to the planet carrier 64.

As shown in Figure 2, the plurality of fingers 114 extend beyond an axial downstream side of the planet carrier 64. In the illustrated example, the axial downstream ends of the plurality of fingers 114 include locking slots 128 on radially inner sides of each of the plurality of fingers 114 to engage a support ring 130. The locking slots 128 extend between opposing sides of each of the plurality of fingers 114.

The support ring 130 includes a plurality of tangs 132 extending outward from a radially outer side of the support ring 130. The plurality of tangs 132 are circumferentially spaced around an outer perimeter of the support ring 130 to align with the locking slots 128 of each of the plurality of fingers 114.

In order to attach the support ring 130 to the torque frame 72, the grooves 126 on the planet carrier 64 are circumferentially aligned with the plurality of fingers 114. Then the planet carrier 64 is moved axially toward the torque frame 72 until the torque frame pin openings 118 align with the carrier pin openings 120. The pins 122 then extend through the torque frame pin openings 118 and the carrier pin openings 120 to lock the planet carrier 64 relative to the torque frame 72 from relative axial movement. The plurality of fingers 114 engaging the grooves 126 prevents the torque frame 72 from rotating relative to the planet carrier 64 and allows torque to be transferred from the planet carrier 64 into the torque frame 72 and then through the fan drive shaft 70.

Once the planet carrier 64 is secured relative to the torque frame 72, the support ring 130 is aligned so that the plurality of tangs 132 are circumferentially aligned with open areas circumferentially located between the plurality of fingers 114. The support ring 130 then moves axially towards the torque frame 72 until the plurality of tangs 132 are axially aligned with the locking slots 128. The locking ring 130 is then rotated either clockwise or counterclockwise until the plurality of tangs 132 are aligned with the plurality of fingers 114 and located within the locking slots 128. A lock nut 134 is treaded onto a threaded portion of the support ring 130 to prevent the support ring 130 from rotating relative to the torque frame 72.

Once the support ring 130 has been secured to the torque frame 72, the support ring 130 will then support a radially inner side of the fan thrust bearing 108. This allows for a compact packaging of the geared architecture 48 that can reduce the overall length of the gas turbine engine 20 and allow the geared architecture to be straddled by both the fan roller bearing 106 and the fan thrust bearing 108.

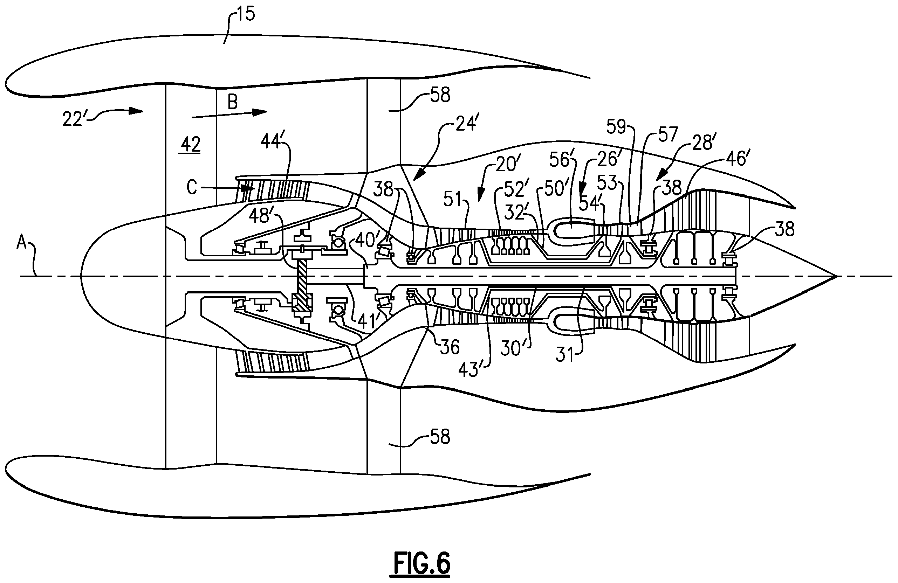

Figure 6 illustrates another example gas turbine engine 20'. The example gas turbine engine 20' is similar to the gas turbine engine 20 except where described below or shown in the Figures. The gas turbine engine 20' is disclosed herein as a three-spool turbofan that generally incorporates a fan section 22', a compressor section 24', a combustor section 26', and a turbine section 28'.

The exemplary engine 20' generally includes a low speed spool 30', an intermediate spool 31, and a high speed spool 32' mounted for rotation about an engine central longitudinal axis A relative to an engine static structure 36 via several bearing systems 38.

The low speed spool 30' generally includes an inner shaft 40' that interconnects a fan 42 through an input shaft 41', a first (or low) pressure compressor 44' and a first (or low) pressure turbine 46'. The inner shaft 40' is connected to the fan 42 through a speed change mechanism, which in the exemplary gas turbine engine 20' is illustrated as a geared architecture 48' to drive the fan 42 at a lower speed than the low speed spool 30'. In one example, the low pressure compressor 44' includes at least one compressor stage and no more than five compressor stages. In another example, the low pressure compressor 44' includes at least two compressor stages and no more than four compressor stages.

The intermediate spool 31' includes an intermediate shaft 43 that interconnects a third (or intermediate) pressure compressor 51 with a third (or intermediate) pressure turbine 53. The core airflow is compressed by the low pressure compressor 44', the intermediate pressure compressor 51, and the high pressure compressor 52', mixed and burned with fuel in the combustor 56', then expanded over the high pressure turbine 54', the intermediate pressure turbine 53, and low pressure turbine 46'. The mid-turbine frame 57 includes airfoils 59 which are in the core airflow path C. The turbines 46', 53, and 54' rotationally drive the respective low speed spool 30', intermediate spool 31, and the high speed spool 32' in response to the expansion. It will be appreciated that each of the positions of the fan section 22', compressor section 24', combustor section 26', turbine section 28', and geared architecture 48' may be varied. For example, the geared architecture 48 may be located aft of combustor section 26' or even aft of turbine section 28', and fan section 22' may be positioned forward or aft of the location of the geared architecture 48'.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claim should be studied to determine the true scope and content of this disclosure.

## Claims

1. A speed change mechanism (48;48') for a gas turbine engine comprising:
a planetary gear system;
a torque frame (72) surrounding the speed change mechanism (48;48'), wherein the torque frame (72) includes a plurality of fingers (114) that engage grooves (126) in a planet carrier (64) of the speed change mechanism (48;48'), and the planetary gear system is configured to drive a fan section (22;22') and a low pressure compressor (44;44'); and
a bearing support (130) attached to an end of the torque frame (72) for supporting a fan section bearing (108), wherein the bearing support (130) is attached to a distal end of the plurality of fingers (114);
**characterized in that**:
the bearing support (130) includes at least one tang (132) that engages a groove (128) in at least one of the plurality of fingers (114), the groove (128) being located on a radially inner side of at least one of the plurality of fingers (114).

2. The mechanism of claim 1, wherein the planetary gear system includes a sun gear (60) configured for communication with a fan drive turbine (46;46') and a planet carrier (64) configured for communication with the fan section (22;22').

3. A gas turbine engine (20;20') comprising:
a fan section (22;22');
the speed change mechanism of claim 1, wherein the speed change mechanism (48;48') drives the fan section (22;22'); and
a first fan section support bearing (106) mounted forward of the speed change mechanism (48;48') and a second fan section bearing (108) mounted aft of the speed change mechanism (48;48').

4. The gas turbine engine of claim 3, wherein the speed change mechanism (48;48') is a planetary gear system including a sun gear (60) in communication with a fan drive turbine (46;46') and a planet carrier (64) in communication with the fan section (22;22').

5. The gas turbine engine of claim 3 or 4, wherein the torque frame (72) includes a first end for engaging the fan section (22;22') and second end supporting the second fan section bearing (108).

6. The gas turbine engine of any of claims 3 to 5, wherein the second fan section bearing (108) is a fan thrust bearing supported on the bearing support (130).

7. The gas turbine engine of any of claims 3 to 6, wherein the speed change mechanism (48;48') is at least partially axially aligned with a compressor section (24;24').

8. The gas turbine engine of any of claims 3 to 7, further comprising a low speed spool (30'), an intermediate spool (31), and a high speed spool (32').

9. A method of assembling a gas turbine engine comprising:
supporting a fan section (22;22') on a first fan section support bearing (106) located forward of a speed change mechanism (48;48'); and
supporting the fan section (22;22') on a second fan section support bearing (108) located aft of the speed change mechanism (48;48'), wherein the speed change mechanism (48;48') is a planetary gear system supported by a torque frame (72) including a first end for engaging the fan section (22;22') and a second end attached to a bearing support (130) for supporting the second fan section support bearing (108), and wherein the torque frame (72) includes a plurality of fingers (114) that surround a planet carrier (64) of the planetary gear system, and the bearing support (130) includes at least one tang (132) that engages a groove (128) in at least one of the plurality of fingers (114), the groove (128) being located on a radially inner side of at least one of the plurality of fingers (114).

10. The method of claim 9, wherein the gas turbine engine includes a low speed spool (30'), an intermediate spool (31), and a high speed spool (32') and a low pressure compressor (44') including at least one compressor stage and no more than five compressor stages.

11. The method of claim 9 or 10, further comprising supporting a fan section (22;22') and a low pressure compressor (44;44') on the first fan section support bearing (106) and second fan section support bearing (108).

## Patentansprüche

1. Drehzahlwechselmechanismus (48; 48') für ein Gasturbinentriebwerk, umfassend:
ein Planetengetriebe;
eine Drehmomentabstützung (72), die den Drehzahlwechselmechanismus (48; 48') umgibt, wobei die Drehmomentabstützung (72) eine Vielzahl von Fingern (114) beinhaltet, die in Rillen (126) in einem Planetenträger (64) des Drehzahlwechselmechanismus (48; 48') eingreift, und wobei das Planetengetriebe so konfiguriert ist, dass es einen Fanabschnitt (22; 22') und einen Niederdruckverdichter (44; 44') antreibt; und
einen Lagerträger (130), der an einem Ende der Drehmomentabstützung (72) zum Stützen des Fanabschnittlagers (108) angeordnet ist, wobei der Lagerträger (130) an einem distalen Ende der Vielzahl von Fingern (114) angebracht ist;
**dadurch gekennzeichnet, dass**:
der Lagerträger (130) mindestens einen Zapfen (132) beinhaltet, der in eine Rille (128) in mindestens einem aus der Vielzahl von Fingern (114) eingreift, wobei die Rille (128) an einer radial inneren Seite des mindestens einen aus der Vielzahl von Fingern (114) angeordnet ist.

2. Mechanismus nach Anspruch 1, wobei das Planetengetriebe ein Sonnenrad (60), das zur Kommunikation mit einer Fanantriebsturbine (46; 46') konfiguriert ist, und einen Planetenträger (64) beinhaltet, der zur Kommunikation mit dem Fanabschnitt (22; 22') konfiguriert ist.

3. Gasturbinentriebwerk (20; 20'), umfassend:
einen Fanabschnitt (22; 22');
den Drehzahlwechselmechanismus nach Anspruch 1, wobei der Drehzahlwechselmechanismus (48; 48') den Fanabschnitt (22; 22') antreibt; und
ein erstes Fanabschnittstützlager (106), das vor dem Drehzahlwechselmechanismus (48; 48') montiert ist, und ein zweites Fanabschnittlager (108), das hinter dem Drehzahlwechselmechanismus (48; 48') montiert ist.

4. Gasturbinentriebwerk nach Anspruch 3, wobei der Drehzahlwechselmechanismus (48; 48') ein Planetengetriebe ist, das ein Sonnenrad (60) in Kommunikation mit einer Fanantriebsturbine (46; 46') und einen Planetenträger (64) in Kommunikation mit dem Fanabschnitt (22; 22') beinhaltet.

5. Gasturbinentriebwerk nach Anspruch 3 oder 4, wobei die Drehmomentabstützung (72) ein erstes Ende zum Eingreifen in den Fanabschnitt (22; 22') und ein zweites Ende, das das zweite Fanabschnittlager (108) stützt, beinhaltet.

6. Gasturbinentriebwerk nach einem der Ansprüche 3 bis 5, wobei das zweite Fanabschnittlager (108) ein Fanschublager ist, das an dem Lagerträger (130) gestützt wird.

7. Gasturbinentriebwerk nach einem der Ansprüche 3 bis 6, wobei der Drehzahlwechselmechanismus (48; 48') mindestens teilweise axial auf einen Verdichterabschnitt (24; 24') ausgerichtet ist.

8. Gasturbinentriebwerk nach einem der Ansprüche 3 bis 7, ferner eine langsamlaufende Spule (30'), eine Zwischenspule (31) und eine schnelllaufende Spule (32') umfassend.

9. Verfahren zum Zusammenbauen eines Gasturbinentriebwerks, umfassend:
Stützen eines Fanabschnitts (22; 22') an einem ersten Fanabschnittstützlager (106), das vor einem Drehzahlwechselmechanismus (48; 48') angeordnet ist; und
Stützen des Fanabschnitts (22; 22') an einem zweiten Fanabschnittstützlager (108), das hinter dem Drehzahlwechselmechanismus (48; 48') angeordnet ist, wobei der Drehzahlwechselmechanismus (48; 48') ein Planetengetriebe ist, das von einer Drehmomentabstützung (72) gestützt wird, das ein erstes Ende zum Eingreifen in den Fanabschnitt (22; 22') und ein zweites Ende beinhaltet, das an einem Lagerträger (130) zum Stützen des zweiten Fanabschnittstützlagers (108) angebracht ist, und wobei die Drehmomentabstützung (72) eine Vielzahl von Fingern (114) beinhaltet, die einen Planetenträger (64) des Planetengetriebe umgibt, und wobei der Lagerträger (130) mindestens einen Zapfen (132) beinhaltet, der in eine Rille (128) in mindestens einem aus der Vielzahl von Fingern (114) eingreift, wobei die Rille (128) an einer radial inneren Seite des mindestens einen aus der Vielzahl von Fingern (114) angeordnet ist.

10. Verfahren nach Anspruch 9, wobei das Gasturbinentriebwerk eine langsamlaufende Spule (30'), eine Zwischenspule (31) und eine schnelllaufende Spule (32') und einen Niederdruckverdichter (44') beinhaltet, der mindestens eine Verdichterstufe und nicht mehr als fünf Verdichterstufen beinhaltet.

11. Verfahren nach Anspruch 9 oder 10, ferner das Stützen eines Fanabschnitts (22; 22') und eines Niederdruckverdichters (44; 44') an dem ersten Fanabschnittstützlager (106) und dem zweiten Fanabschnittstützlager (108) beinhaltend.

## Revendications

1. Mécanisme de changement de vitesse (48 ; 48') pour un moteur à turbine à gaz comprenant :
un système d'engrenage planétaire ;
un cadre de couple (72) entourant le mécanisme de changement de vitesse (48 ; 48'), dans lequel le cadre de couple (72) comporte une pluralité de doigts (114) qui viennent en prise avec des rainures (126) dans un porte-satellites (64) du mécanisme de changement de vitesse (48 ; 48'), et le système d'engrenage planétaire est conçu pour entraîner une section de ventilateur (22 ; 22') et un compresseur basse pression (44 ; 44') ; et
un support de palier (130) fixé à une extrémité du cadre de couple (72) pour supporter un palier de section de ventilateur (108), dans lequel le support de palier (130) est fixé à une extrémité distale de la pluralité de doigts (114) ;
**caractérisé en ce que** :
le support de palier (130) comporte au moins un tenon (132) qui vient en prise avec une rainure (128) dans au moins l'un parmi la pluralité de doigts (114), la rainure (128) étant située sur un côté radialement intérieur d'au moins l'un parmi la pluralité de doigts (114).

2. Mécanisme selon la revendication 1, dans lequel le système d'engrenage planétaire comporte un planétaire (60) conçu pour communiquer avec une turbine d'entraînement de ventilateur (46 ; 46') et un porte-satellites (64) conçu pour communiquer avec la section de ventilateur (22 ; 22').

3. Moteur à turbine à gaz (20 ; 20') comprenant :
une section de ventilateur (22 ; 22') ;
le mécanisme de changement de vitesse selon la revendication 1, dans lequel le mécanisme de changement de vitesse (48 ; 48') entraîne la section de ventilateur (22 ; 22') ; et
un premier palier de support de section de ventilateur (106) monté à l'avant du mécanisme de changement de vitesse (48 ; 48') et un second palier de section de ventilateur (108) monté à l'arrière du mécanisme de changement de vitesse (48 ; 48').

4. Moteur à turbine à gaz selon la revendication 3, dans lequel le mécanisme de changement de vitesse (48 ; 48') est un système d'engrenage planétaire comportant un planétaire (60) en communication avec une turbine d'entraînement de ventilateur (46 ; 46') et un porte-satellites (64) en communication avec la section de ventilateur (22 ; 22').

5. Moteur à turbine à gaz selon la revendication 3 ou 4, dans lequel le cadre de couple (72) comporte une première extrémité pour venir en prise avec la section de ventilateur (22 ; 22') et une seconde extrémité supportant le second palier de section de ventilateur (108).

6. Moteur à turbine à gaz selon l'une quelconque des revendications 3 à 5, dans lequel le second palier de section de ventilateur (108) est un palier de butée de ventilateur supporté par le support de palier (130).

7. Moteur à turbine à gaz selon l'une quelconque des revendications 3 à 6, dans lequel le mécanisme de changement de vitesse (48 ; 48') est au moins partiellement aligné axialement avec une section de compresseur (24 ; 24').

8. Moteur à turbine à gaz selon l'une quelconque des revendications 3 à 7, comprenant en outre une bobine à basse vitesse (30'), une bobine intermédiaire (31) et une bobine à haute vitesse (32').

9. Procédé d'assemblage d'un moteur à turbine à gaz comprenant :
le support d'une section de ventilateur (22 ; 22') sur un premier palier de support de section de ventilateur (106) situé à l'avant d'un mécanisme de changement de vitesse (48 ; 48') ; et
le support de la section de ventilateur (22 ; 22') sur un second palier de support de section de ventilateur (108) situé à l'arrière du mécanisme de changement de vitesse (48 ; 48'), dans lequel le mécanisme de changement de vitesse (48 ; 48') est un système d'engrenage planétaire supporté par un cadre de couple (72) comportant une première extrémité pour venir en prise avec la section de ventilateur (22 ; 22') et une seconde extrémité fixée à un support de palier (130) pour supporter le second palier de support de section de ventilateur (108), et dans lequel le cadre de couple (72) comporte une pluralité de doigts (114) qui entourent un porte-satellites (64) du système d'engrenage planétaire, et le support de palier (130) comporte au moins un tenon (132) qui vient en prise avec une rainure (128) dans au moins l'un parmi la pluralité de doigts (114), la rainure (128) étant située sur un côté radialement intérieur d'au moins l'un parmi la pluralité de doigts (114).

10. Procédé selon la revendication 9, dans lequel le moteur à turbine à gaz comporte une bobine à basse vitesse (30'), une bobine intermédiaire (31) et une bobine à haute vitesse (32') et un compresseur basse pression (44') comportant au moins un étage de compresseur et pas plus de cinq étages de compresseur.

11. Procédé selon la revendication 9 ou 10, comprenant en outre le support d'une section de ventilateur (22 ; 22') et un compresseur basse pression (44 ; 44') sur le premier palier de support de section de ventilateur (106) et le second palier de support de section de ventilateur (108).
